# EUROPEAN PATENT APPLICATION

(11) **EP 1 548 952 A2**
(43) Date of publication of application: **29.06.2005**
(21) Application number: 04030683.9
(22) Date of filing: 23.12.2004
(51) Int. Cl.: H04B 1/38, H04M 1/02

(54) **Mobile terminal with camera**

(30) Priority: 26.12.2003 KR 2003097905
(71) Applicant: LG ELECTRONICS INC., Seoul (KR)
(72) Inventor: Yoo, Young-Hoon, Seoul (KR); Hong, Ju-Young, Gangnam-Gu Seoul (KR)
(74) Representative: von Hellfeld, Axel, Dr. Dipl.-Phys.

(57) **Abstract**

A mobile terminal including a rotating mechanism coupling a main body and a folder and configured to rotate between a closed position in which the folder is folded against the main body and an open position in which the folder is folded open from the main body. Also included is a camera module integrally coupled with the rotating mechanism in which a viewing direction of a camera lens of the camera module coincides with a viewing direction of a display included in the folder.

## Description

### CROSS-REFERENCE TO A RELATED APPLICATION

This application claims priority to Korean application No. 97905/2003 filed on December 26, 2003, the entire contents of which is hereby incorporated in its entirety.

### BACKGROUND OF THE INVENTION

### FEILD OF THE INVENTION

The present invention relates to a mobile terminal, and more particularly to a mobile terminal which allows a user to conveniently use a camera included with the mobile terminal by making a camera lens face a photographing direction desired by the user only by opening or closing a terminal folder of the mobile terminal.

### BACKGROUND OF THE RELATED ART

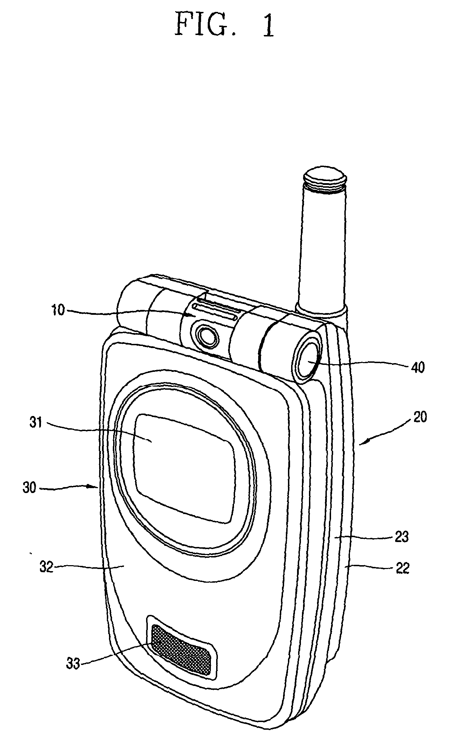

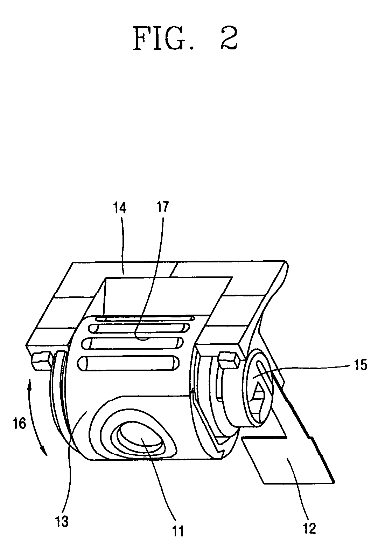

Mobile terminals generally include an Internet access function, a TV reception function, camera function, etc. One example of a mobile phone having a rotary type camera is illustrated in Figure 1 and 2. As shown in Figure 1, the mobile terminal includes a main body 20, a folder 30 with a display (not shown) for displaying information, a rotating mechanism 40 rotatably installed to the main body 20 and integrally rotating relative to the main body 20, and a camera apparatus 10 rotatably fixed and coupled to the main body 20.

Further, the main body 20 includes a main body case 23 forming the profile of the main body 20, a microphone unit (not shown) for receiving voice or sound information, etc. from a user, and a battery 22 detachably mounted on one side of the main body 20. The main body 22 also includes a circuit part (not shown) having circuitry for controlling the mobile terminal.

In addition, as shown, the folder 30 includes a folder case 32 formed to surround the display, an auxiliary liquid crystal display screen 31 providing fundamental information to a front center part of the folder case 32, and a speaker unit 33 for providing voice or sound information. The folder 30 also includes a plurality of circuit parts (not shown) also used for controlling different operations related to the mobile terminal.

Further, with reference to Figure 2, the camera apparatus 10 includes a rotating shell 13 rotatably coupled to the main body 20, a fixed member 14 fixed and coupled to the main body 20 and for supporting the rotation of the rotating shell 13, a camera lens 11 rotatably mounted integrally with the rotating shell 13 and formed as a convex lens, a FPCB (Flexible Printed Circuit Board) 12 connecting the camera lens 11 and the appropriate circuit parts to transmit signals, and a cap 15 sealing a hole (not shown) for mounting the camera lens 11 to the rotating shell 13. Also shown is a handgrip including a plurality of grooves 17 the user grips to rotate the lens 11 to a desired position. That is, the rotating shell 13 can be rotated using the grooves 17 so the camera lens 11 faces an object to be photographed. Also, because the rotating shell 13 is mounted to the fixed member 14, the camera apparatus 10 can rotate regardless of the rotating mechanism 40.

Therefore, to take a picture, a user must open the folder 30 and then manually rotate the rotating shell 13 while viewing the image displayed on the display to focus the camera lens 11 on the object to be photographed. When the object is properly displayed on the display, the user presses a photographing button to take the picture.

In more detail, to photograph an object in a direction opposite to that of the display when the folder 30 is opened, the user must rotate the shell 13 so the camera lens 11 faces the object. In this position, the direction of the display is opposite to the viewing direction of the camera lens 11. The user may then photograph the object while viewing the image displayed on the display. Further, when the user wants to photograph an object in the direction of the display when the folder 30 is opened (e.g., to take a picture of himself or herself), the user must rotate the shell 13 so the camera lens 11 faces the user. The user may then take the picture.

However, the above-described mobile terminal is inconvenient because the rotating shell 13 has to be rotated based on whether or not the position of the object is consistent with the direction of the display when the folder 30 is opened. Further, the user is only able to photograph an object when the folder 30 is opened, which increase the overall size of the terminal acting as a camera and creates an awkward feeling when taking a picture compared to taking a picture with a stand-alone camera.

### SUMMARY OF THE INVENTION

Accordingly, one object of the present invention is to at least address the above noted and other objects.

Another object of the present invention is to automatically adjust the viewing direction of a camera lens according to the opening and closing of a terminal folder without having to manually adjust the viewing direction of the camera lens.

To achieve these and other advantages and in accordance with the purpose of the present invention, as embodied and broadly described herein, the present invention provides a novel mobile terminal including a rotating mechanism coupling a main body and a folder and configured to rotate between a closed position in which the folder is folded against the main body and an open position in which the folder is folded open from the main body. Also included is a camera module integrally coupled with the rotating mechanism in which a viewing direction of a camera lens of the camera module coincides with a viewing direction of a display included in the folder.

Additional advantages, objects, and features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims.

### BRIEF DESCRIPTION OF THE DRAWINGS

The invention will be described in detail with reference to the following drawings in which like reference numerals refer to like elements wherein:

Fig. 1 is a perspective view illustrating a general mobile terminal with a camera apparatus;

Fig. 2 is a perspective view illustrating the camera apparatus in Fig. 1;

Fig. 3 is a perspective view illustrating a mobile terminal of the present invention;

Fig. 4 is a perspective view illustrating the mobile terminal in Fig. 3 when partially disassembled;

Fig. 5 is a side view illustrating a viewing direction of a camera lens when a folder is closed according to the present invention;

Fig. 6 is a side view illustrating a viewing direction of the camera lens when the folder is opened according to the present invention;

Fig. 7 is a side view illustrating the folder being rotated according to the present invention;

Fig. 8 is a side view illustrating the folder rotated 180° according to the present invention; and

Fig. 9 is a side view illustrating the folder rotated 180° and in a closed position according to the present invention.

### BEST MODE OF THE INVENTION

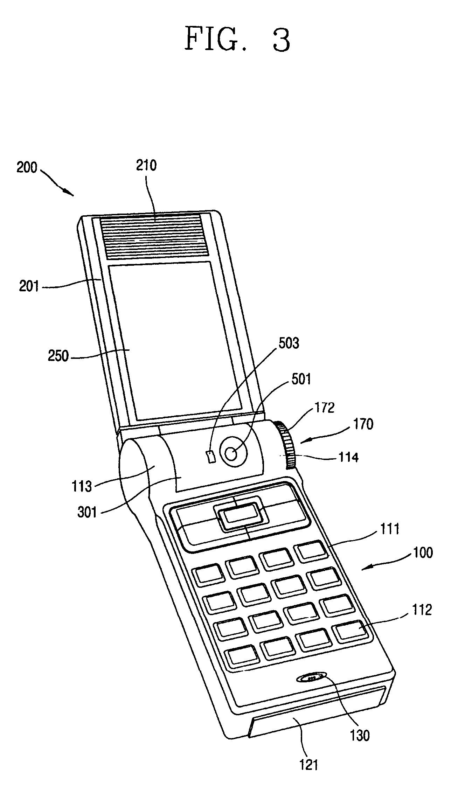

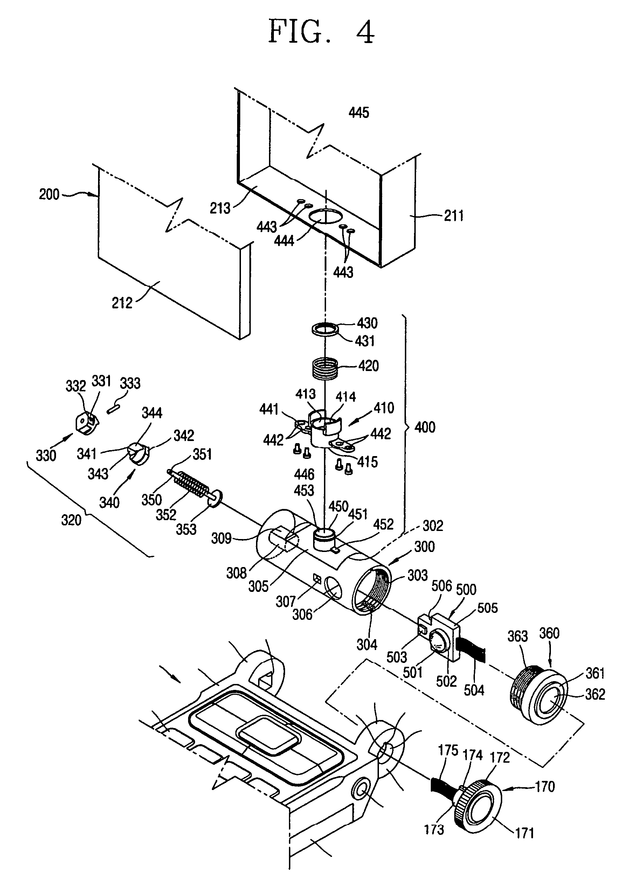

A mobile terminal according to the present invention will now be described in detail with reference to the accompanying drawings. Fig. 3 is a perspective view illustrating a mobile terminal of the present invention, and Fig. 4 is a perspective view illustrating the mobile terminal when partially disassembled.

As shown in Figs. 3 and 4, the mobile terminal includes a main body 100, a folder 200 with a display 250, and a rotating mechanism 300 rotatably installed to the main body 100 and rotating relative to the main body 100 integrally with the folder 200. Also shown is a turning mechanism 400 that allows the folder 200 to be turned around a longitudinal axis thereof. Further, a camera module 500 is coupled to the rotating mechanism 300. Note, the viewing direction of a camera lens 501 is opposite to the direction of the display 250 when the folder is closed and is the same as the direction of the display 250 when the folder 200 is opened. These features will be described in more detail later.

As shown in Fig. 3, the main body 100 includes a main body case 111 forming a profile of the main body 100, a microphone unit 130 for receiving information such as a voice or sound; a keypad 112 formed on a front surface of the main body case 111 for inputting information; a circuit part (not shown) mounted inside the main body case 111; a battery 121 detachably connected to one side of the main body case 111, and a first hinge coupling portion 113 projecting at one side. Further, as shown in Fig. 4, the coupling portion 113 is provided at an inner side contacting the rotating mechanism 300 and includes an insertion groove 116 for receiving a hinge cam projection 330 of the rotating mechanism 330. Also shown in Fig. 4 is a second hinge coupling portion 14 projecting at the other side of the main body case 111 and including an insertion hole 115 for mounting the rotating mechanism 300 while forming a pair with the first hinge coupling portion 113.

Further, an inner side of the second hinge coupling portion 114 contacting the rotating mechanism 300 includes the insertion hole 115 for receiving a round hollow projection 361 of a case cover 360 and an outer side coupling portion 114 includes a fixed hole 117 for receiving a fixed body 173 of a mode selection switch 170 and a fixed groove 118 for receiving a fixed projection 174 projecting on the fixed body 173.

Fig. 4 further illustrates the rotating mechanism 300 including a rotating case 301 rotating integrally with the folder 200, a hinge apparatus 320 rotatably connecting the first hinge coupling portion 113 and one side face of the rotating case 301, and the case cover 360 enclosing a receptacle space in the rotating case 301 and being rotatably coupled to parts of the main body 100.

Further, the rotating case 301 has a cylinder shape with a predetermined length and is blocked at one side. Also, a surface of the blocked side has a hinge fixing groove 308 for receiving the hinge apparatus 320. A guide groove 304 for receiving the camera module 500 is also formed on the inner peripheral surface of the rotating case 301. In addition, also shown is a lens exposure hole 306 for receiving the camera lens 501, and a flash exposure hole 307 for receiving a flash 503 of the camera module 500.

Further, the hinge apparatus 320 includes a hinge cam 340 rotating integrally with the folder 200 and having a shape profile of sloping planes 343 and 344 formed at one side a hinge cam projection 330 mounted at parts of the main body 100 and contacted to the hinge cam 340 with a constant contact force to move along the shape profile of the sloping planes 343 and 344. Also included is a hinge spring 352 inserted with a predetermined compression displacement so as to have a constant contact force between the hinge cam 340 and the hinge cam projection 330. The hinge apparatus 320 also includes a supporting shaft 350 penetrating the hinge spring 352, the hinge cam 340 and the hinge cam projection 330, and a pin 333 engaged to a pin hole 351 formed on the supporting shaft 350 through a coupling hole 332 formed on a head portion 331 of the hinge cap projection 330 to integrally fix the supporting shaft 350 and the hinge cam portion 330. Further illustrated is a spring stopping plate 353 formed at one end of the supporting shaft 350 and supported so the hinge spring 352 has a predetermined compression displacement.

Further, as shown, the hinge cam 340 includes an ascending sloping plane 343 curved at a steep slope from a stopping ridge 341 and a descending sloping plane 344 curved at a gentle slope. A flat plane 342 to be coupled to a flat portion 309 of the hinge fixing groove 308 is formed on the outer side face of the hinge cam 340 for rotating integrally with the rotating case 301.

When the folder 200 is opened relative to the main body 100 at an angle smaller than a rotary angle with the stopping ridge 341, the folder 200 is closed with a force given thereto. When the folder 200 is opened relative to the main body 100 at an angle larger than the rotary angle with the stopping ridge 341, the folder 200 is fully opened with a force given thereto.

In addition, the hinge spring 352 is preferably disposed between the spring stopping plate 353 and the hinge cam 340. Also, the hinge fixing groove 308 includes a flat portion 309 engaging with the flat plane 342 of the hinge cam 340 so the hinge cam 340 can rotate integrally with the folder 200 when the folder 200 is rotated.

Further, as shown, the case cover 360 has a male screw portion 363 formed at one side for enclosing the rotating case 301, and is engaged with a female screw portion 303 of the rotating case 301. The cover 360 also includes a hollow hole 362 formed at the center of the other side for passing a signal line through, and the hollow projection 361 rotatably inserted into the insertion hole 115 of the main body 100.

Referring now to the turning mechanism 400 in Fig. 4. As shown, the turning mechanism 400 includes an installation column 450 constituting the rotating mechanism and projecting in a circular cylinder shape on the outer side face of the rotating case 301 rotating integrally with the folder 200. Also included is a turning cam projection 452 projecting around the installation column 450, a turning cam holder 410 having a hollow portion 413 for receiving the installation column 450, and a cam portion 415 coupled to the turning cam projection 452 to provide a discontinuous moment when the folder 200 turns around. Further, a turn spring 420 is located on a top surface 414 of the turning cam holder 410 and disposed with a predetermined compression displacement to apply a constant force in a downward direction of the turning cam holder 410. Also included is a fixed nut 430 located on the top surface of the turn spring 420 so as to maintain the compression displacement of the turn spring 420 and including a female screw portion 431 coupled and fixed to the male screw portion 451 formed at an upper part of the installation column 450. Further, the folder cases 211 and 212 constituting the outer part of the folder 200 are engaged with the turning cam holder 410 so as to integrally turn with each other.

That is, as shown, folder engaging portions 441 extend on the outer side face of the turning cam holder 410 and include engaging holes 442, and bolts 446 penetrate through the fixed holes 443 formed on the folder cases 211 and 212 via the engaging holes 442. Then, nuts 445 engage the bolts 446 and integrally couple the folder cases 211 and 212 and the turning cam holder 410.

Preferably, the number of the turning cam projection 453 is more than one, the cam portion 415 projects at an equivalent interval while forming a waveform in a circumferential direction, and the turn spring 420 is a coil spring.

Further, the bottom face of the hollow portion 453 is formed to penetrate the inside of the rotating case 301. Thus, a signal line transmitting a signal to the display 250 may pass through the rotating case 301 from the circuit part in the main body 100 and be connected to the inside of the folder 200 via the hollow portion 453 and the through hole 444. Also, as noted above, the fixed holes 443 are formed on a bottom face 213 of the folder case 211 so as to be bolted to the engaging holes 442 of the engaging portions 441. Female screw threads are also formed on the fixed holes 443 and bolted to the engaging holes 442 through the fixed holes 443, thereby connecting and fixing the folder 200 and the turning cam holder 410 so as to be integrally turnable.

When a user turns the folder 200 around, the integrally coupled turning cam holder 410 is also turned around. At this time, the cam portion 415 formed on the back surface of the turning cam holder 410 is contacted to the turning cam projection 452, and is given a predetermined force by the turn spring 420. Therefore, when the user turns the folder 200 around, the cam portion 415 turns around by colliding with the turning cam projection 452 to thus provide a discontinuous moment to the user. When the user does not turn the folder 200 around, the folder 200 is fixed at a specific position without being moved.

Further, as shown in Fig. 3, the folder 200 includes the display 250 formed on a rear surface of the folder 200 so as to display various information and the image of an object being photographed. Also included is a folder case 201 surrounding the display 250. As shown in Fig. 4, the folder case 201 includes a front part case 211 and a rear part case 212, which can include a space for receiving a circuit part inside.

Note, on the bottom face 213 of the front part case 211, a through hole 444 is formed into which the installation column 450 can be inserted through the hollow portion 413, and the fixed holes 443 couple the turning cam holder 410 and the folder 200 integrally by bolt coupling.

Next, the camera module 500 includes a camera body 505 having a receptacle space for storing a circuit part (not shown), a camera lens 501 projectably mounted to the camera body 505 and for collecting the image of an object; a lens frame 502 surrounding the camera lens 501 so the camera lens 501 is mounted on the camera body 505, and a camera signal line 164 for transmitting a signal to the circuit part in the main body 100.

Further, the camera body 505 has a projected stepped shape at one end that is inserted into the hollow portion until contacting a stepped plane 302 so that camera is coupled with the case 301.

The camera body 505 also preferably includes a flash 503 on the front surface thereof, thereby making it easier to photograph an object even in a dark place. The main body 100 preferably further includes a photographing button 120 at one side of the main body 100 so as to instruct the camera module 500 to photograph, a mode selection switch 170 at one side of the main body case 111 for changing a photographing mode such as close-up photographing, outdoor photographing and night photographing, etc.

As shown in Figure 4, the mode selection switch 170 includes a fixed body 173 inserted and fixed into the fixed hole 117, a rotary body 171 enabling a user to select the photographing mode by rotation relative to the fixed body 173, and a signal line 175 for transmitting the mode information selected by the user to the circuit part in the main body 100.

In addition, the fixed body 173 includes a fixed projection 174 to be inserted into the fixed groove 118 and for fixing and coupling the fixed body 173. Preferably, the rotary body 171 has a rough surface portion 172 formed through a knurling process so the user's hand does not slip when selecting the photographing mode.

Note, the user may change the photographing mode into general photographing, clear day photographing, cloudy day photographing, night photographing, outdoor photographing, indoor photographing, etc. by rotating the rotary body 171. Each photographing mode has an optimum shutter speed, exposure speed and the like input and set thereto according to a specific condition such as weather, light intensity, etc. Thus, the user can produce higher quality photographs by utilizing the mode selection switch 170.

Next, an operation of the mobile terminal of the present invention will be described.

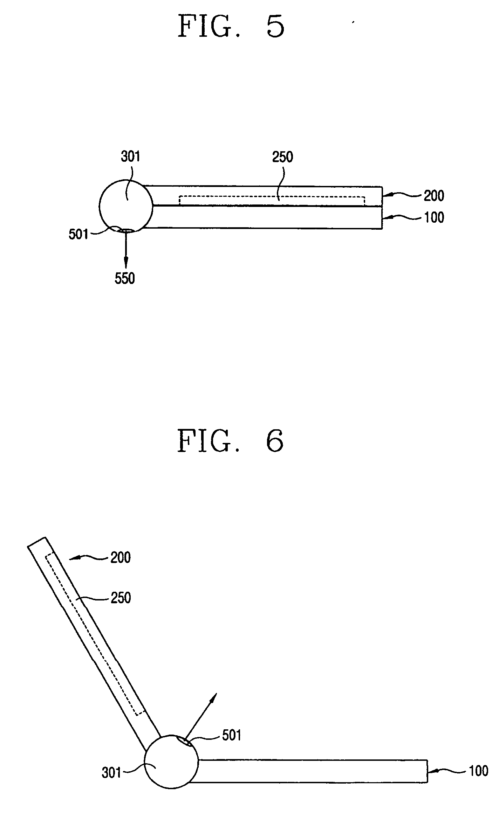

Fig. 5 is a side view illustrating a viewing direction of a camera lens when the folder is closed, and Fig. 6 is a side view illustrating a viewing direction of the camera lens when the folder is opened according to the present invention. As shown in Fig. 5, when a user carries the mobile terminal without using it, the mobile terminal is folded in a manner that the display 250 of the folder 200 faces the main body 100. In this instance, the viewing direction 550 of the camera lens faces the rear surface of the main body 100.

As shown in Fig. 6, when the user opens the folder 200, the lens 501 integrally rotates with the rotating case 301 such that the camera lens 501 is also rotated at an angle at which the folder 200 is rotated. That is, both the display 250 and camera lens 50 face the user. Therefore, the user is able to take photographs of himself or a group of friends, for example, without modifying the viewing direction 550 of the camera lens either. In other words, because the camera lens 501 faces the user when the folder 200 is opened, the user can take photographs by pressing the photographing button after reviewing the display 250. Further, as noted above, the quality of the photograph can be increased by selecting the appropriate photographing mode using the mode selection switch.

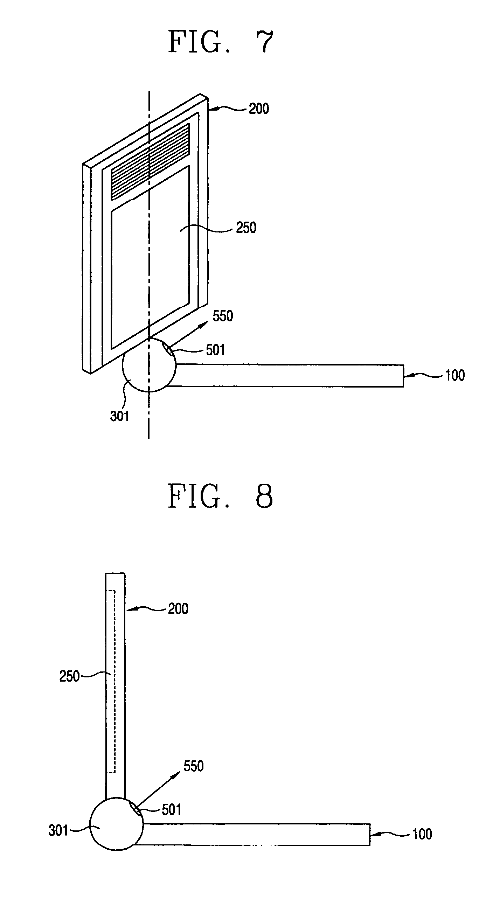

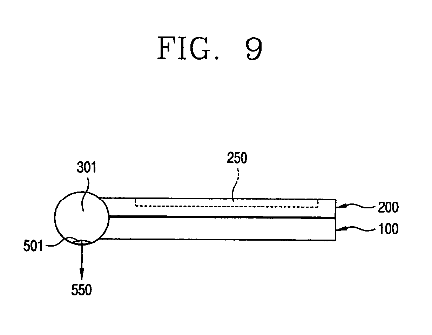

Turning now to Fig. 7, which is a side view illustrating the folder being turned around and Fig. 8, which is a side view illustrating the folder turned around 180° according to the present invention. As shown, when the user wants to photograph an object in a direction opposite to the direction of the display 250, the user can open the folder 200 at a certain angle and then turn the folder 200 around. Note that while the display 250 turns around, the direction 550 of the camera lens is not changed. Thus, when the folder 200 is turned around 180°, the display 250 faces away from the user and the camera lens 501 faces the user, thereby making the direction of the display 250 and the viewing direction 550 of the camera lens opposite to each other.

Further, Fig. 9 illustrates the folder 200 closed against the main body 100. Thus, in this arrangement, the user can photograph an object positioned in front of the user. That is, the display 250 faces the user and the camera lens 501 faces the object, thus making it is possible to take photographs. That is, the user can take photographs by pressing the photographing button while viewing an object, checking and adjusting the image of the object displayed on the display 250 and setting the composition of the object.

In other words, the mobile terminal according to the present invention advantageously provides the user with more convenience in operating the camera. That is, the user does not have to manual rotate the camera lens 501 according to the direction of an object. Thus, the mobile terminal of the present invention provides greater convenience to the user, and makes the camera of the mobile terminal feel like a stand-alone digital camera. Accordingly, even people not familiar with the camera function of a mobile terminal can take photographs with ease.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses are intended to cover the structures described herein as performing the recited function and not only structural equivalents but also equivalent structures.

## Claims

1. A mobile terminal, comprising:
a rotating mechanism coupling a main body and a folder of the terminal and configured to rotate between a closed position in which the folder is folded against the main body and an open position in which the folder is folded open from the main body; and
a camera module integrally coupled with the rotating mechanism in which a viewing direction of a camera lens of the camera module coincides with a viewing direction of a display included in the folder.

2. The mobile terminal of claim 1, further comprising:
a turning mechanism connecting the folder to the rotating mechanism such that the folder can be turned around a longitudinal axis of the folder.

3. The mobile terminal of claim 1, wherein the main body includes:
a microphone unit configured to receive voice or sound information;
a main body case forming a profile of the main body;
a keypad formed on a front surface of the main body case and configured to input information;
a circuit part mounted inside the main body case and configured to control an operation of the main body;
a battery detachably connected to one side of the main body case;
a first hinge coupling portion projecting at one side of the main body case and including an insertion groove configured to mount the rotating mechanism; and
a second hinge coupling portion projecting at the other side of the main body case and including an insertion hole configured to mount the rotating mechanism while forming a pair with the first hinge coupling portion.

4. The mobile terminal of claim 3, wherein the main body further includes:
a photographing button formed at one side of the main body so as to instruct the camera module to photograph a desired object; and
a mode selection switch provided at one side of the main body case and configured to change a photographing mode of the camera module.

5. The mobile terminal of claim 4, wherein the mode selection switch includes:
a fixed body configured to be inserted and fixed into the insertion of the second hinge coupling portion of the main body;
a rotary body configured to enable a user to select the photographing mode by rotation relative to the fixed body; and
a signal line configured to transmit the mode information selected by the user to the circuit part in the main body.

6. The mobile terminal of claim 1, wherein the rotating mechanism includes:
a hinge apparatus configured to connect parts of the main body and parts of the folder;
a rotating case configured to receive the hinge apparatus and to integrally rotate with the folder; and
a case cover enclosing a receptacle space in the rotating case and being rotatably coupled to parts of the main body.

7. The mobile terminal of claim 6, wherein the hinge apparatus includes:
a hinge cam configured to rotate integrally with the folder and having a shape profile of sloping planes formed at one side;
a hinge cam projection mounted at parts of the main body, and configured to contact the hinge cam with a constant contact force to move along the shape profile of the sloping planes of the hinge cam;
a hinge spring inserted with a predetermined compression displacement so as to have a constant contact force between the hinge cam and the hinge cam projection;
a supporting shaft penetrating the hinge spring, the hinge cam and the hinge cam projection;
a pin engaged to a pin hole formed on the supporting shaft through a coupling hole formed on a head portion of the hinge cap projection to integrally fix the supporting shaft and the hinge cam portion; and
a spring stopping plate formed at one end of the supporting shaft and supported so the hinge spring has the predetermined compression displacement.

8. The mobile terminal of claim 7, wherein the hinge cam includes an ascending sloping plane curved at a steep slope from a stopping ridge and a descending sloping plane curved at a gentle slope, and a flat plane on another surface to be coupled to a flat portion of the hinge fixing groove for rotating integrally with the rotating case.

9. The mobile terminal of claim 7, wherein the hinge spring is disposed between the spring stopping plate and the hinge cam.

10. The mobile terminal of claim 6, wherein the rotating case has a cylinder shape with a flat plane including a hinge fixing groove for receiving the hinge apparatus, a camera guide groove formed at an inner side in a column direction so as to insert the camera module into the rotating case, a lens exposure hole for exposing the camera lens of the camera module and a flash exposure hole penetrated for exposing a flash of the camera module.

11. The mobile terminal of claim 10, wherein the hinge fixing groove includes a flat portion engaging with the flat plane of the hinge cam so that the hinge cam can rotate integrally with the folder when the folder is rotated.

12. The mobile terminal of claim 2, wherein the turning mechanism includes:
an installation column having a circular cylinder shape on an outer side face of the rotating case and configured to integrally rotate with the folder;
a turning cam projection projecting around the installation column;
a turning cam holder having a hollow portion configured to receive the installation column and a cam portion coupled to the turning cam projection to provide a discontinuous moment when the folder is turned around;
a turn spring located on a top surface of the turning cam holder and disposed with a predetermined compression displacement to apply a constant force in a downward direction of the turning cam holder;
a fixed nut located on a top surface of the turn spring to maintain the compression displacement of the turn spring and including a female screw portion coupled and fixed to the male screw portion formed at an upper part of the installation column; and
a folder engaging mechanism configured to couple folder cases forming an outer part of the folder to the turning cam holder so they to turn integrally with each other.

13. The mobile terminal of claim 12, wherein a number of the turning cam projection is more than one.

14. The mobile terminal of claim 12, wherein the cam portion of the turning cam holder projects at an equivalent interval while forming a waveform in a circumferential direction.

15. The mobile terminal of claim 12, wherein the turn spring is a coil spring.

16. The mobile terminal of claim 12, wherein the folder engaging mechanism includes:
folder engaging portions extending on an outer side face of the turning cam holder and being provided with engaging holes;
bolts penetrating through the fixed holes formed on the folder cases and the engaging holes of the folder engaging portion; and
nuts engaged to the bolts and for integrally coupling the folder cases and the turning cam holder.

17. The mobile terminal of claim 1, wherein the camera module includes:
a camera body having a receptacle space for storing a circuit part therein;
a camera lens projectably mounted to the camera body and configured to collect the image of an object;
a lens frame configured to surround and mount the camera lens on the camera body; and
a camera signal line configured to transmit a signal to the circuit part in the main body.

18. The mobile terminal of claim 17, wherein the camera body includes a flash formed on the front surface of the camera body.

19. The mobile terminal of claim 17, wherein the camera body has a stepped shape at one end and configured to insert into a hollow portion of the rotating mechanism until contacting a stepped plane such that the camera module is coupled with the rotating mechanism.

20. A mobile terminal comprising:
a folding part having a display for reviewing an object to be photographed;
a main body part;
a rotating part connecting the folding part and the main body part such that the folding part can be folded against the main body part and can be folded open from the main body part; and
a camera included with the rotating part and configured to integrally rotate with the rotating part such that when the folding part is folded open from the main body part, a viewing direction of the camera faces a user of the mobile terminal.

21. The mobile terminal of claim 20, wherein the camera integrally rotates with the rotating part such that when the folding part is folded open from the main body part, rotated 180° about its own longitudinal axis and folded against the main body part, the viewing direction of the camera faces an object to be photographed, and a viewing direction of the display opposite to the viewing direction of object faces the user.

22. The mobile terminal of claim 20, further comprising:
a turning part engaged with the rotating part and the folding part and configured to allow the folding part to be turned around its longitudinal axis with respect to the main body.

23. The mobile terminal of claim 20, wherein the main body part includes:
a microphone unit configured to receive voice or sound information;
a main body case forming a profile of the main body part;
a keypad formed on a front surface of the main body case and configured to input information;
a circuit part mounted inside the main body case and configured to control an operation of the main body part;
a battery detachably connected to one side of the main body case;
a first hinge coupling portion projecting at one side of the main body case and including an insertion groove configured to mount the rotating mechanism; and
a second hinge coupling portion projecting at the other side of the main body case and including an insertion hole configured to mount the rotating mechanism while forming a pair with the first hinge coupling portion.

24. The mobile terminal of claim 23, wherein the main body part further includes:
a photographing button formed at one side of the main body part so as to instruct the camera to photograph a desired object; and
a mode selection switch provided at one side of the main body case and configured to change a photographing mode of the camera.

25. The mobile terminal of claim 24, wherein the mode selection switch includes:
a fixed body configured to be inserted and fixed into the insertion of the second hinge coupling portion of the main body part;
a rotary body configured to enable a user to select the photographing mode by rotation relative to the fixed body; and
a signal line configured to transmit the mode information selected by the user to the circuit part in the main body part.
